# EUROPEAN PATENT APPLICATION

(11) **EP 0 919 354 A1**
(43) Date of publication of application: **02.06.1999**
(21) Application number: 97904639.8
(22) Date of filing: 25.02.1997
(51) Int. Cl.: B29C 49/58, B29C 49/30, B29C 49/56

(54) **BLOW MOLDING MACHINE**

(71) Applicant: Kao Corporation, Chuo-Ku Tokyo 103 (JP)
(72) Inventor: KIMURA, Eiki, Kao Corporation, Haga-gun, Tochigi 321-34 (JP)
(74) Representative: Grünecker, Kinkeldey, Stockmair & Schwanhäusser Anwaltssozietät
(86) International application number: JP9700538
(87) International publication number: WO9838026

(57) **Abstract**

A blow molding machine comprising a mold-clamping device (1) including a body portion (2), tie bars (3), (3) forwardly and backwardly movably supported in horizontal postures thereof by the body portion (2), one pair of platens (4), (6) supported by the tie bars (3), (3), and split mold halves (7), (8) provided on mutually opposing sides of the one pair of platens (4), (6), and a hammering device (9) for hammering a blow pin (93) from the underneath of the split mold halves (7), (8), wherein the hammering device (9) is supported by the one pair of platens (4), (6) or the tie bars (3), (3).

## Description

### Technical Field

This invention relates to a blow molding machine usable when a hollow-molded product is manufactured by a blow molding process, and more particularly to a reciprocating type blow molding machine in which the hammering is performed from the underneath.

### Background Art

A blow molding machine to be used when a molded product is produced by a blow molding process includes a mold-clamping device for opening and closing a mold, a hammering device for hammering a blow pin into the mold, and an extruding device for continuously extruding a parison.

In a reciprocating type blow molding machine, the mold-clamping device comprises a body portion, tie bars forwardly and backwardly movably supported in their horizontal postures by the body portion, one pair of platens supported by the tie bars, and split mold halves provided on the mutually opposing side of the one pair of platens.

In the above-mentioned blow molding machine, the parison is continuously supplied downwardly from the extruding device, the parison is then held between the split mold halves, then the split mold halves are moved away from the parison, then the blow pin is hammered into the split mold halves, which are in their clamped states, by the hammering device, and after a blowing process and a degassing process are finished, the split mold halves are opened so that a molded product is subjected to a taking-out process. By this, one molding cycle is completed.

By the way, in the conventional blow molding machine, since the hammering device for the blow pin is provided independently from the split mold halves and the tie bars of the mold-clamping device and the blow pin can be hammered by the hammering device only after the completion of the movement (away from the parison) of the split mold halves, one molding cycle becomes inevitably long. Also, in the conventional blow molding machine, the centering is performed between the blow pin and the mold after the clamping unit is moved to the position where the blow pin is hammered. At that time, unless a moving thrust to the clamping unit is the same as the one applicable when an actual molding is performed, a problem occurs in that the hammering position is offset. Moreover, in the conventional blow molding machine, since the centering adjustment work is performed while a thrust is kept applied, risks are accompanied by the work. Furthermore, in some instances, the hammering position is difficult to be held stably when vibrations are increased in actual molding, and as a result, the hammering position is offset from the position where the centering adjustment has been made. In addition, because the hammering device is provided independently from the split mold halves and the tie bars as previously mentioned, it is necessary to use mechanical parts each having a large physical strength, taking into consideration the loads applicable to the tie bars and the platens during the hammering operation, and as a result, the device is inevitably increased in scale.

### Disclosure of Invention

It is, therefore, an object of the present invention to provide a blow molding machine in which the molding cycle can be reduced, the centering accuracy can be increased in hammering of the blow pin, and the device can be reduced in size.

The present invention has achieved the above object by providing a blow molding machine comprising a mold-clamping device including a body portion, tie bars forwardly and backwardly movably supported in horizontal postures thereof by the body portion, one pair of platens supported by the tie bars, and split mold halves provided on mutually opposing sides of the one pair of platens, and a hammering device for hammering a blow pin from the underneath of the split mold halves, wherein the hammering device is supported by the one pair of platens or the tie bars.

In the blow molding machine according to the present invention, the split mold halves are opened and closed by the mold-clamping device, and the blow pin is hammered from the underneath of the split mold halves by the hammering device with the parison held between the split mold halves. By doing so, the blow molding is carried out. Since the hammering device is supported by the one pair of platens or the tie bars and the hammering device is moved together with the platens or the tie bars when the body portion of the clamping device is escaped from the parison which is continuously extruded, the blow pin can be hammered into the split mold halves during the movement of the body portion. Therefore, the molding cycle can be reduced. Also, the high degree of accuracy of the centering is maintained when the blow pin is hammered. Moreover, since the load occurrable when the blow pin is hammered is offset by the power relation of action/reaction between the platens or the tie bars and the hammering device, the loads applied to the platens and the tie bars by the hammering operation are reduced and therefore, the device can be reduced in size to that extent.

### Brief Description of Drawings

Fig. 1 is a schematic side view showing one embodiment of a blow molding machine according to the present invention;
Fig. 2 is a perspective view showing a hammering device in the blow molding machine of the above embodiment;
Fig. 3 is a plan view showing a mold-clamping device in the blow molding machine of the above embodiment;
Fig. 4 is a plan view showing a mechanism for adjusting an expanding- and-contracting length of a crank mechanism of the mold-clamping device in the blow molding machine of the above embodiment;
Fig. 5 is a view showing the expanding- and- contracting length adjusting mechanism, Fig. 5(a) is a side view thereof, and Fig. 5(b) is a sectional view taken on line C-C and viewed in a direction as indicated by arrows of Fig. 5(a);
Figs. 6 is a front view showing a mechanism for adjusting a fixing position of a front platen of the mold-clamping device in the blow molding machine of the above embodiment;
Fig. 7 is a view showing the fixing position adjusting mechanism, Fig. 7(a) is a side view thereof, and Fig. 7(b) is a sectional view taken on line A-A and viewed in a direction as indicated by arrows of Fig. 6; and
Fig. 8 is a view showing the operation of the hammering device in the blow molding machine of the above embodiment, Fig. 8(a) is a schematic view of a main portion showing a starting state of the operation of the hammering device, Fig. 8(b) is a schematic view of a main portion showing an inserting state of a blow pin into split mold halves, and Fig. 8(c) is a schematic view of a main portion showing a complete state of the hammering operation of the blow pin.

### Best Mode for Carrying Out the Invention

One embodiment of the present invention will be described hereinafter with reference to the accompanying drawings.

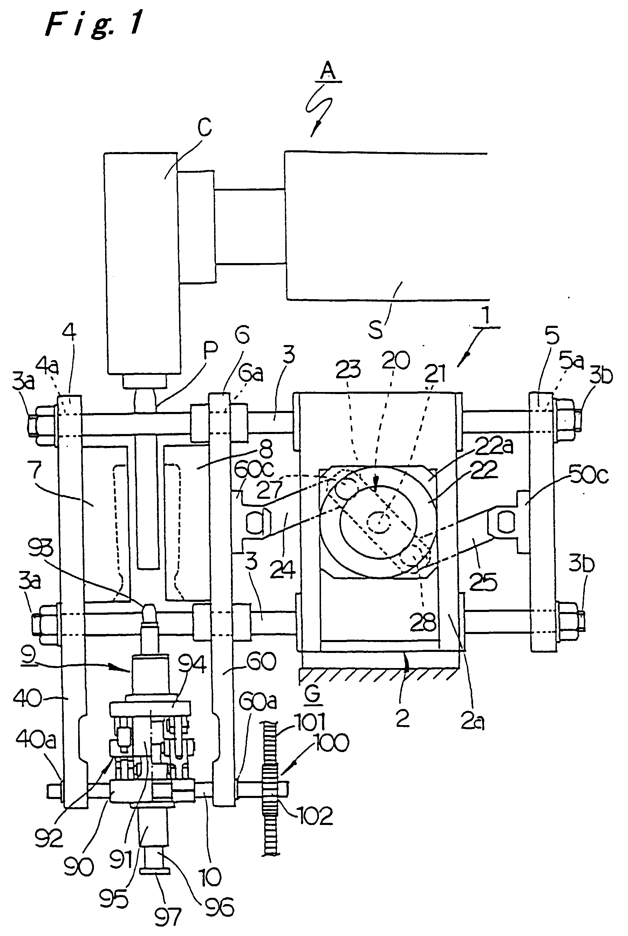

Figs. 1 through 7 show one embodiment of a blow molding machine according to the present invention. In these Figures, reference symbol A denotes a blow molding machine; P, a parison; S, an extruding device, and C, a cross head of the extruding device S, respectively.

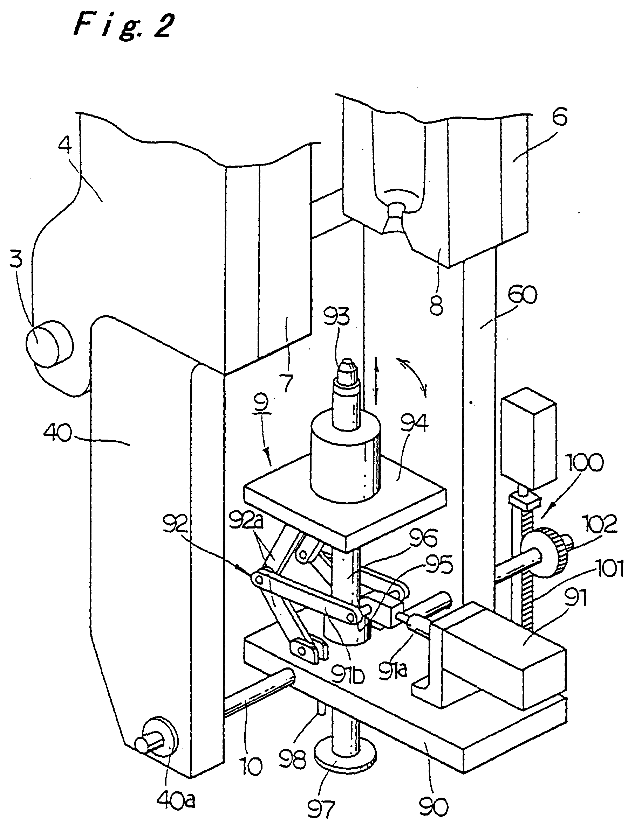

As shown in Figs. 1 and 2, the blow molding machine A comprises a mold-clamping device 1 including a body portion 2, two tie bars 3, 3 forwardly and backwardly movably supported in their horizontal postures by the body portion 2, and a front platen 4, a rear platen 5 and a movable platen 6 which are supported by the tie bars 3, 3, split molds (split mold halves) 7, 8 provided on mutually opposing sides of the front platen 4 and the movable platen 6 (the one pair of platens). The blow molding machine A further comprises a hammering device 9 for hammering a blow pin 93 into split mold halves 7, 8 from the underneath of the split mold halves 7, 8.

The front platen 4 and the movable platen 6 are integrally provided with support plates 40, 60, respectively. The hammering device 9 is supported by the support plates 40, 60 through a rotary shaft 10 turnably disposed.

The hammering device 9 includes a base plate 90 fixed to a generally central portion of the rotary shaft 10, an electrically driven piston- cylinder mechanism 91 fixed to the top of the base plate 90, a toggle mechanism 92 which is stretched and bent by this piston-cylinder mechanism 91, and a blow pin 93 which is moved upwardly and downwardly in response to the stretching and bending motion of the toggle mechanism 92.

A connecting rod 91b is connected through a pin to a distal end portion of an operating rod 91a of the piston-cylinder mechanism 91. This connecting rod 91b is joined through a pin to a joint portion of the operating rod 92a of the toggle mechanism 92. The operating rod 92a is stretched and bent in response to the horizontal movement of the operating rod 91a.

The blow pin 93 is fixedly positioned to an attachment base 94 fixed to an upper end portion of the operating rod 92a of the toggle mechanism 92 by a tool, such that a compressed air, which is supplied through a compressor (not shown), can be blown generally vertically into the split mold halves 7, 8 from the underneath of the split mold halves 7, 8.

A pinion-rack mechanism 100 is attached to one end portion of the rotary shaft 10. A pinion 102 is rotated by raising and lowering a rack 101 of the pinion-rack mechanism 100, so that the rotary shaft 10 is rotated about its axis. By doing so, the blow pin 93 can be inclined about the rotary shaft 10.

A guide tube 95 is thrust into the base plate 90 at its area located under the blow pin 93. A guide shaft 96 is thrust into the guide tube 95 so as to extend downwardly from an under surface of the attachment base 94 of the blow pin 93. The guide shaft 96 is provided at a lower end portion thereof with a stopper plate 97. When this stopper plate 97 comes into abutment with a stopper pin 98 extending downwardly from a lower surface of the base plate 90, the blow pin 93 is restricted in its upward movement. The rising height of blow pin 93 can be adjusted by adjusting a space between the stopper plate 97 and the stopper pin 98 by adjusting the projecting length of the stopper pin or by changing the position of the stopper plate 90.

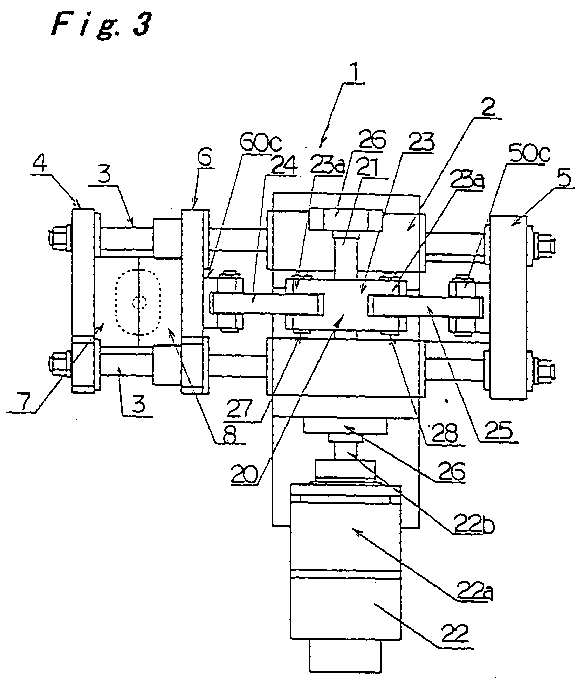

As shown in Figs. 1 and 3, the body portion 2 of the mold-clamping device 1 comprises a frame member 2a, as a main component member, fixed to the top of a carriage G. The tie bars 3, 3 are forwardly and backwardly movably supported in their horizontal postures by the frame member 2a at its diagonally located corner portions. On the body portion 2, there are provided a crank mechanism 20 and an electric motor 22 for transmitting a driving force to a crank shaft 21 of the crank mechanism 20. The movable platen 6 and the rear platen 5 are connected to a crank arm 23 of the crank mechanism 20 respectively through connecting rods 24 and 25. The carriage G is capable of movement in a horizontal direction from a position under the cross head C of the extruding device S, so that the split mold halves 7, 8 can escape from the continuously extruded parison P. The carriage G may escape downwardly or diagonally.

The crank mechanism 20 chiefly comprises the crank shaft 21, the crank arm 23 fixed to a generally central portion of the crank shaft 21 in an axial direction thereof, and rods 24, 25 fixed to the crank arm 23. Opposite end portions of the crank shaft 21 are turnably supported by pillow blocks 26 fixed to the device body 2. A driving shaft 22b of the electric motor 22 is connected to one end portion of the crank shaft 21 through a reduction unit 22a. Owing to this arrangement, the crank mechanism 20 is actuated by driving the electric motor 22.

The crank arm 23 includes arm portions 23a which are arranged in rotational symmetry at 180 degrees with respect to the crank shaft 21. The connecting rods 24, 25 are connected to distal end portions of the arm portions 23a through connecting pins 27, 28, as later described, respectively. When the arm portions 23a and the connecting rods 24, 25 are aligned, the spit molds 7, 8 are brought into contact with each other to generate a prescribed clamping force.

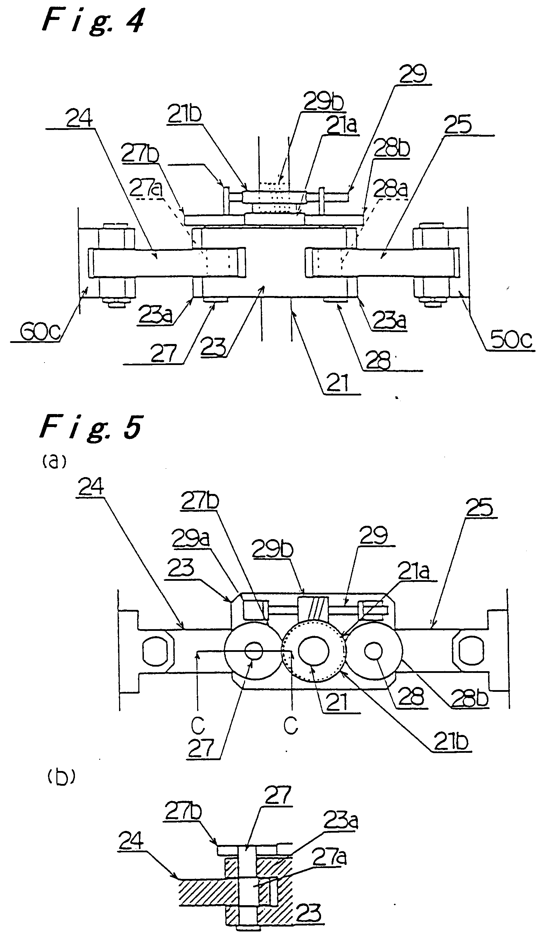

As shown in Figs. 4 and 5(b), the connecting pins 27, 28 for connecting the crank arm 23 and the connecting rods 24, 25 together are provided at axially intermediate portions thereof with eccentric portions 27a, 28a each having a larger outside diameter than that of the opposite end portions and displaced in axis from that of each opposite end portion. The connecting pins 27, 28 are provided respectively with gears 27b, 28b fixed respectively to distal end portions of the connecting pins 27, 28. The opposite end portions of the connecting pins 27, 28 are turnably supported by the arm portions 23a of the crank arm 23, and the eccentric portions 27a are inserted into insertion cavities (not shown) of the connecting rods 24, 25.

As shown in Figs. 4 and 5(a), a hand shaft 29 is horizontally and rotatably supported by a support member 29a at a portion of a side surface portion of the crank arm 23 under (above in Fig. 5(a)) the gears 27b, 28b. A worm gear 29b is fixed to an axially intermediate portion of the hand shaft 29. On the other hand, a gear 21a meshed with the gears 27b, 28b and a worm wheel 21b fixed to the gear 21a and meshed with the worm 29b are arranged on the crank shaft 21 for rotation relative to the crank shaft 21. The hand shaft 29 is rotated to cause the connecting pins 27, 28 rotate through the worm 29b, the worm wheel 21b, the gear 21a, and the gears 27b, 28b. This varies the distance from the axis of the crank shaft 21 to the axis of the eccentric portions 27a, 28a, so that the expanding length of the crank mechanism 20 is adjusted. By doing so, the crank arm 23 and the connecting rods 24, 25 can be expanded linearly irrespective of the dimension and configuration of the mold. Here, the eccentric portions 27a, 28a, the gears 27b, 28b, 21a, the hand shaft 29, the worm 29b, and the worm wheel 21b constitute a mechanism for adjusting the expanding length of the crank mechanism 20.

As shown in Fig. 1, male screw portions 3a, 3b are provided on front and rear end portions of the tie bars 3,3, respectively. Bushes 40b, 50b of front and rear platens 4, 5 as later described are threadingly engaged with the male screw portions 3a, 3b, respectively.

The front platen 4, the rear platen 5, and the movable platen 6 are each formed of a regular square plate-like member in a front view. Insertion cavities 4a, 5a, 6a for inserting the tie bars 3,3 therein are provided at diagonal corner portions of the platens. The front platen 4, the rear platen 5, and the movable platen 6 can be arranged on the tie bars 3,3 so that the tie bars 3,3 are symmetrically located with respect to the centers of the split molds 7, 8.

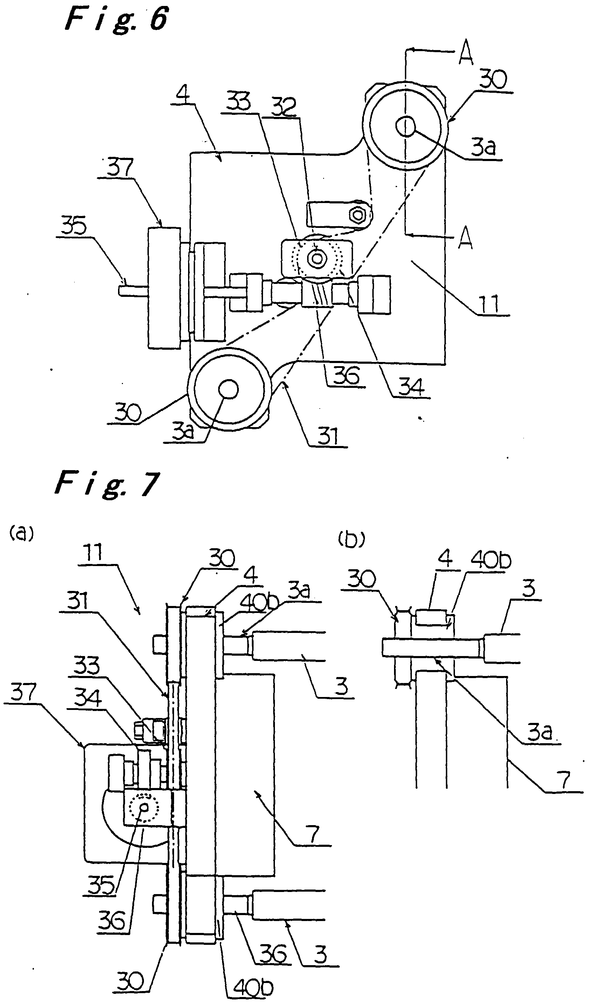

Bushes 40b, 50b having female screw portions (not shown) corresponding to the male screw portions 3a, 3b of the tie bars 3 are provided at the insertion cavities 4a, 5a of the front and rear platens 4, 5. Owing to this arrangement, these platens can be fixed to prescribed positions of the front and rear end portions of the tie bars 3,3. A pulley 30 (see Fig. 7) is fixed to a front surface portion of the bush 40b of the front platen 4. Support jigs 50c, 60c for supporting one end portions of later described connecting rods 24, 25 at the same height as the axis of the crank shaft 21 through the pins are fixed to surface portions of the rear platen 5 and the movable platen 6 opposing the device body 2.

As shown in Figs 6 and 7, an endless timing belt 31 is strained over each pulley 30 fixed to the bushes 40b of the front platen 4. A forwardly horizontally projecting shaft 32 is turnably provided generally on the center of the front surface portion of the front platen 4. A driving pulley 33 and a worm wheel 34 are fixed to this shaft 32. On a front surface portion of the front platen 4, a hand shaft 35 is horizontally and turnably supported by a support member such that the hand shaft 35 is located below the worm wheel 34. A worm 36 meshed with the worm wheel 34 is fixed to an axially intermediate portion of the hand shaft 35. A counter 37 is attached to one end portion of the hand shaft 35. By doing so, a fixed position of the front platen 4 can be indicated by an amount of movement by this counter 37. Here, the pulley 30, the timing belt 31, the shaft 32, the driving pulley 33, the worm wheel 34, the hand shaft 35, the worm gear 36, and the counter 37 constitute a fixed position adjusting mechanism 11 capable of fixing the front platen 4 to the tie bar 3 at a desired position of a front end portion of the tie bar 3.

The blow molding machine A includes a control unit (not shown) having a sequencer. A sequence of operations of the extruding device S, the device body 2, and the hammering device 9 can be controlled in according with a control flow of this sequencer.

Operation of the blow molding machine A is described next.

First, in order that a required clamping force will be generated at a position where the crank arm 23 and the connecting rods 24, 25 are brought into alignment in match with various conditions such as dimension, size of the split molds 7, 8, blow pressure, etc., the fixed position of the front platen 4 is preliminarily adjusted at the front end portions of the tie bars 3, 3 by the fixed position adjusting mechanism 11, or the positions of the movable platen 6 and the rear platen 5 are preliminarily adjusted by the expanding and contracting length adjusting mechanism. The hammering power of the hammering device 9 can be estimated based on an angle of the toggle mechanism 92 and a thrust force for stretching the toggle mechanism. Based on this estimation, the way how to stretch the toggle mechanism 92 or the thrust force of the piston-cylinder mechanism 91 is established. The positioning of the center of the blow pin 93 is performed by loosening and releasing the blow pin 93 from the blow pin base 94 so that the blow pin 93 can move on the top of the blow pin base 94, then, a hammering operation is carried out carefully to bring the brow pin 93 and the split molds 7, 8 into abutment with each other while confirming rattling or play of the blow pin 93, and finally, the blow pin 93, the center of which is in alignment with the mold, is fixedly positioned on the top of the blow pin base 94. By adjusting the hammering height as previously mentioned, the adjusting operation is finished. The positioning of the center of the blow pin 93 is very simple and the position is fixed in an actual hammering state. Accordingly, reliability is high, cost is low, and operation can be made easily and rapidly. Thereafter, the crank mechanism 20 is established such that the connecting rods 24, 25 are bent relative to the arm portion 23a of the crank arm 23, and the parison P is hung down within the cavity of the split molds 7, 8 as shown in Fig.1. By doing so, an initial setting is finished.

Next, when the electric motor 22 is driven, its driving force is transmitted to the crank shaft 21 after it is reduced in speed by a reduction gear unit 22a. Then, the crank arm 23 fixed to the crank shaft 21 is also rotated in response to rotation of the crank shaft 21. As a consequence, the connecting rods 24, 25 connected to the arm portion 23a of the crank arm 23 through the connecting pins 27, 28 are stretched outwardly from the center of the crank shaft 21. In response to the stretching of the connecting rods 24, 25, the connecting rods 24, 25 cause the rear platen 5 and the movable platen 6 move away from each other through the support jigs 50c, 60c.

Then, the movable platen 6 approaches the parison P along the tie bars 3. Also, the front platen 4 approaches the parison P by the backward movement of the tie bars 3 themselves in response to the backward movement of the rear platen 5. Lastly, the abutment surfaces of the split mold halves 7, 8 come into abutment, and the parison P is held between the split mold halves 7, 8.

Upon the completion of the clamping operation, the parison P is cut by a parison cutter (not shown).

Upon completion of the cutting of the parison P, the carriage G with the body portion 2 fixed thereto is moved horizontally in order to allow the split mold halves 7, 8 to escape from the parison P which is continuously extruded from the cross head of the extruding device S. The horizontal movement of the carriage G causes the split mold halves 7, 8 move horizontally in their clamped states.

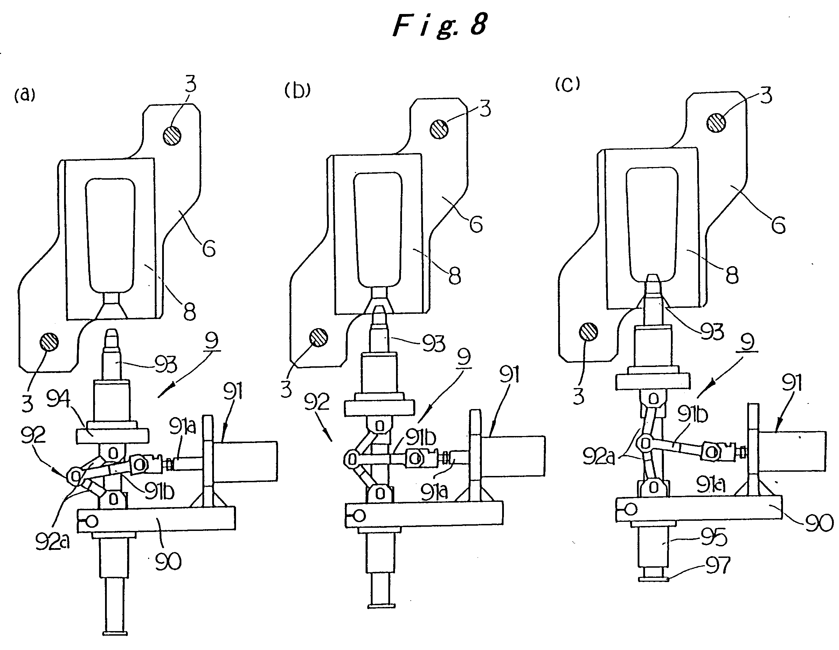

On the other hand, the operation of the hammering device 9 is started at the same timing as the cutting of the parison P. Then, as shown in Fig. 8(a), the connecting rod 91b is moved horizontally in a contracting direction by the operating rod 91a of the piston-cylinder mechanism 91. Subsequently, the operating rod 92a of the toggle mechanism 92, which is connected to the connecting rod 91b, is gradually stretched. Then, a guide projection (not shown) of the base plate 94 attached to an upper end portion of the operating rod 92a is raised while being guided by a guide groove (not shown). In response to the rising movement of the operating rod 92a, the blow pin 93 approaches (see Fig. 8(b)) the split mold halves which are in their clamped states.

Then, as shown in Fig. 8(c), the blow pin 93 is inserted into an insertion port of the clamped split mold halves 7, 8 from the underneath, and stopped by the stopper plate 97 provided on the linear shaft 96 and the stopper 98 provided on the base 90 of the hammering device 9. Then, the blow pin 93 discharges a compressed air to carry out the blow molding operation. In this blow molding machine, the hammering device 9, the front platen 4, and the movable platen 6 are integrally provided, and the sequence of operations of the hammering device 9 so far described can be performed during the movement of the split mold halves 7, 8. Thus, one molding cycle can be reduced extensively.

When the blowing operation is performed by the hammering device 9, since the inside diameter of the mouth portion of the molded product is formed by the blow pin 93, it is, basically, not required to process the inside diameter later. Further, the insertion position of the blow pin 93 can be adjusted by the stopper 98, and adjustment such as the biting off of the mouth portion of the molded product, etc. can be performed.

After the completion of the blowing process and the degassing process in the blow molding process, the contracting operation of the crank mechanism 20 starts and the split mold halves 7, 8 are opened forwardly and backwardly.

When the split molding halves 7, 8 are moved by a distance long enough for the split surfaces of the split mold halves 7, 8 not to interfere with the molded product, the operation of the pinion-rack mechanism 100 attached to the rotary shaft 10 is started and as a result, the rotary shaft 10 is rotated. Then, with the blow pin 93 inserted into the mouth portion of the molded product, the blow pin 93 is rotated to the position where a receiving process machine (not shown) is on standby. After the molded product is captured by the receiving process machine, the contracting operation of the toggle mechanism 92 is started and the blow pin 93 is withdrawn from the mouth portion of the molded product to separate the hammering device and the molded product from each other. By doing so, one molding cycle is finished.

After one molding cycle is finished, the body portion 2 and the hammering device 9 are returned respectively to their initial states (the body portion 2 is moved to the underneath of the extruding device S, the main base 90 of the hammering device 9 is rotationally returned, and the toggle mechanism 92 is bent) so as to standby for the start of the next molding cycle.

As described in hereinbefore, according to the blow molding machine A of this embodiment, the hammering device 9 is integral with the front platen 4 and the movable platen 6, and the sequence of operations of the hammering device 9 can be performed during the movement of the split mold halves 7, 8. Thus, the molding cycle can be reduced extensively.

Further, the hammering device 9 is integral with the front platen 4 and the movable platen 6. Accordingly, the centering accuracy can be increased when the blow pin 23 is hammered.

Moreover, the front platen 4 and the movable platen 6 are trimmed with the base plate 90 of the hammering device 9. Accordingly, the load occurrable when the hammering operation is made, is offset by the relation of force between action and reaction within the support plates 40, 60 between the platen 6 or the tie bar 3 and the hammering device 9. Accordingly, the load applicable to each platen or the tie bars 3, 3 due to the hammering operation can be reduced. For this reason, the designing strength of each platen and the tie bars can be reduced and the device can be made smaller in size to that extent.

Furthermore, since the crank mechanisms 20 are employed in the mold clamping device 1 for opening and closing the split molds 7, 8, it is not necessary to normally apply a hydraulic oil which is necessary in a hydraulic operating piston cylinder mechanism. Accordingly, the running cost can be reduced compared with the conventional technique, and the various problems arising from the use of hydraulic devices can be obviated.

Moreover, since the torque load required for clamping is low, a small-sized motor of a low torque such as the electric motor can be employed. Thus, the devices can be designed smaller to that extent.

Further, since a uniform clamping force can be applied to the abutment surfaces of the split molds 7, 8 by arranging the tie bars 3, 3 diagonally to the center of each of the split molds 7, 8, an excellent hollow molded product having less burr can be manufactured. Since the front platens 4 and the movable platens 6 where the split molds 7, 8 are arranged can be reduced in weight and size, the devices themselves can be designed smaller and lighter. Thus, the requirements for energy saving and space saving can be fulfilled.

Moreover, since the split mold can be clamped in the state that the crank arm and the connecting rod are stretched linearly by the fixed position adjusting mechanism of the front platen and the expanding and contacting length adjusting mechanism of the crank mechanism, a molding operation can be performed by a uniform clamping force in a stable manner irrespective of the size and configuration of the mold.

It should be noted that the blow molding machine according to the present invention is not limited in the mold clamping device to the blow molding machine of the above embodiment but that it can be changed, where necessary, in size and configuration without departing from the objects of the present invention.

In the blow molding machine A of the above embodiment, the hammering device 9 is supported by a support plate integral with the front platen 4 and the movable platen 6. In the alternative, the hammering device may be supported directly by the tie bars 3, 3.

Further, in the blow molding machine A of the above embodiment, both the fixed position adjusting mechanism and the expanding and contracting length adjusting mechanism are employed in each mold-clamping device. In the alternative, either of the mechanisms may only be employed, or, in case no change is made with respect to the mold, the fixed position adjusting mechanism and the expanding and contracting length adjusting mechanism are not necessarily employed.

Although, in the blow molding machine according to the present invention, it is particularly preferred to employ an electric motor as a power source for driving the crank mechanism 20 as in the blow molding machine A of the above embodiment, the crank mechanism may be driven by a power source which is driven by fuel such as kerosene, gasoline, heavy oil, and the like.

Although, in the blow molding machine according to the present invention, it is particularly preferred that the opening and closing mechanism for the split molds is performed by a crank mechanism as in the blow molding machine A of the above embodiment, other opening and closing mechanisms may be employed as the opening an closing mechanism for the split mold.

### Industrial Applicability

According to the blow molding machine of the present invention, the molding cycle can be reduced compared with the conventional machines, the centering accuracy can be increased when the blow pin is hammered, and the device can be made small in size.

## Claims

1. A blow molding machine comprising: a mold-clamping device (1) including a body portion (2), tie bars (3), (3) forwardly and backwardly movably supported in horizontal postures thereof by said body portion (2), one pair of platens (4), (6) supported by said tie bars (3), (3), and split mold halves (7), (8) provided on mutually opposing sides of said one pair of platens (4), (6); and
a hammering device (9) for hammering a blow pin (93) from the underneath of said split mold halves (7), (8),
wherein said hammering device (9) is supported by said one pair of platens (4), (6) or said tie bars (3), (3).

2. The blow molding machine according to claim 1, wherein said one pair of platens (4), (6) are integrally provided with support plates (40), (60), respectively, and said hammering device (9) is supported by said support plates (40), (60) through a rotary shaft (10) which is turnably disposed.

3. The blow molding machine according to claim 1, wherein said hammering device (9) includes a base plate (90) fixed to a generally central portion of said rotary shaft (10), an electrically driven piston- cylinder mechanism (91) fixed to the top of said base plate (90), a toggle mechanism (92) which is stretched and bent by said piston-cylinder mechanism (91), and a blow pin (93) which is moved upwardly and downwardly in response to the stretching and bending motion of said toggle mechanism (92).

4. The blow molding machine according to claim 3, wherein a connecting rod (91b) is connected through a pin to a distal end portion of an operating rod (91a) of said piston-cylinder mechanism (91), said connecting rod (91b) is joined through a pin to a joint portion of said operating rod (92a) of said toggle mechanism (92), and said operating rod (92a) is stretched and bent in response to the horizontal movement of said operating rod (91a).

5. The blow molding machine according to claim 3, wherein said blow pin (93) is fixedly positioned to an attachment base (94) fixed to an upper end portion of said operating rod (92a) of said toggle mechanism (92), such that a compressed air, which is supplied through a compressor, can be blown generally vertically into said split mold halves (7), (8) from the underneath of said split mold halves (7), (8).
